Europäisches Patentamt

European Patent Office

Office européen des brevets

(19)

(11) **EP 0 937 291 B1**

(12) **FASCICULE DE BREVET EUROPEEN**

(45) Date de publication et mention
de la délivrance du brevet:
**17.04.2002 Bulletin 2002/16**

(51) Int Cl.$^7$: **G06T 9/00**

(21) Numéro de dépôt: **97913268.5**

(22) Date de dépôt: **06.11.1997**

(86) Numéro de dépôt international:
**PCT/FR97/01996**

(87) Numéro de publication internationale:
**WO 98/20457 (14.05.1998 Gazette 1998/19)**

(54) **PROCEDE ET DISPOSITIF DE PREDICTION COMPENSEE EN MOUVEMENT**

BEWEGUNGSKOMPENSIERTES VORHERSAGEVERFAHREN UND GERÄT

PREDICTION METHOD AND DEVICE WITH MOTION COMPENSATION

(84) Etats contractants désignés:
**DE FR GB IT**

(30) Priorité: **07.11.1996 FR 9613614**

(43) Date de publication de la demande:
**25.08.1999 Bulletin 1999/34**

(73) Titulaire: **THOMSON multimedia**
**92648 Boulogne Cédex (FR)**

(72) Inventeurs:
• **VIAL, Jean-François**
**F-92648 Boulogne Cedex (FR)**
• **FRANCOIS, Edouard**
**F-92648 Boulogne Cedex (FR)**

(74) Mandataire: **Zhang, Jianguo et al**
**THOMSON multimedia,**
**46 quai A. Le Gallo**
**92648 Boulogne Cédex (FR)**

(56) Documents cités:
• **ASSUNCAO P ET AL: "Rate reduction techniques for MPEG-2 video bit streams" DIGITAL COMPRESSION TECHNOLOGIES AND SYSTEMS FOR VIDEO COMMUNICATIONS, BERLIN, GERMANY, 7-9 OCT. 1996, vol. 2952, ISSN 0277-786X, PROCEEDINGS OF THE SPIE - THE INTERNATIONAL SOCIETY FOR OPTICAL ENGINEERING, 1996, SPIE-INT. SOC. OPT. ENG, USA, pages 450-459, XP000618362**
• **SCHAMEL G: "Graceful degradation and scalability in digital coding for terrestrial transmission" SIGNAL PROCESSING OF HDTV, IV. PROCEEDINGS OF THE INTERNATIONAL WORKSHOP, KAWASAKI, JAPAN, 18-20 NOV. 1992, ISBN 0-444-81551-1, 1993, AMSTERDAM, NETHERLANDS, ELSEVIER, NETHERLANDS, pages 569-577, XP000618399**
• **CHANG S -F ET AL: "A NEW APPROACH TO DECODING AND COMPOSITING MOTION-COMPENSATED DCT-BASED IMAGES" IMAGE AND MULTIDIMENSIONAL SIGNAL PROCESSING, MINNEAPOLIS, APR. 27 - 30, 1993, vol. 5 OF 5, 27 avril 1993, INSTITUTE OF ELECTRICAL AND ELECTRONICS ENGINEERS, pages V-421-V-424, XP000437699**
• **BOUCHEROK F ET AL: "Compatible multi-resolution coding scheme" SIGNAL PROCESSING OF HDTV, IV. PROCEEDINGS OF THE INTERNATIONAL WORKSHOP, KAWASAKI, JAPAN, 18-20 NOV. 1992, ISBN 0-444-81551-1, 1993, AMSTERDAM, NETHERLANDS, ELSEVIER, NETHERLANDS, pages 561-568, XP000618398**
• **MERHAV N ET AL: "A fast algorithm for DCT-domain inverse motion compensation" 1996 IEEE INTERNATIONAL CONFERENCE ON ACOUSTICS, SPEECH, AND SIGNAL PROCESSING CONFERENCE PROCEEDINGS (CAT. NO.96CH35903), 1996 IEEE INTERNATIONAL CONFERENCE ON ACOUSTICS, SPEECH, AND SIGNAL PROCESSING CONFERENCE PROCEEDINGS, ATLANTA, GA, USA, 7-10 M, ISBN 0-7803-3192-3, 1996, NEW YORK, NY, USA, IEEE, USA, pages 2307-2310 vol. 4, XP000645664**

EP 0 937 291 B1

- **VIAL J F: "FREQUENCY-ORIENTED CODING OF TRANSFORM COEFFICIENTS" PROCEEDINGS OF THE PICTURE CODING SYMPOSIUM (PCS), LAUSANNE, MAR. 17 - 19, 1993, no. -, 17 mars 1993, SWISS FEDERAL INSTITUTE OF TECHNOLOGY, pages 8.3/A-D, XP000346392**
- **TOURTIER P J ET AL: "MOTION COMPENSATED SUBBAND CODING SCHEMES FOR COMPATIBLE HIGH DEFINITION TV CODING" SIGNAL PROCESSING. IMAGE COMMUNICATION, vol. 4, no. 4 / 05, 1 août 1992, pages 325-344, XP000293752**
- **WEIDONG KOU ET AL: "A DIRECT COMPUTATION OF DCT COEFFICIENTS FOR A SIGNAL BLOCK TAKEN FROM TWO ADJACENT BLOCKS" IEEE TRANSACTIONS ON SIGNAL PROCESSING, vol. 39, no. 7, 1 juillet 1991, pages 1692-1695, XP000240169**

**Description**

L'invention concerne la compression de données numériques vidéo, plus particulièrement un procédé de prédiction pour le codage et le décodage d'images exploitant la transformation cosinus discrète.

Les codeurs utilisant de telles techniques sont connus pour être par exemple décrits dans la norme MPEG (Motion Picture Expert Group en anglo-saxon).

Ces codeurs réalisent un découpage de l'image en blocs d'images, une transformée cosinus discrète de ces blocs pour fournir des blocs de coefficients, une quantification de ces coefficients, un codage en longueur variable.

Des codages de type intra n'utilisent que le contenu intrinsèque de l'image selon le procédé décrit ci-dessus.

Des codages de type inter réalisent une estimation de mouvement entre par exemple l'image précédente et l'image courante pour compenser en mouvement l'image précédente, fournissant ainsi une image prédite, le codage étant alors effectué sur la différence entre l'image courante et l'image prédite.

La transformée cosinus permet de supprimer la redondance spatiale et la compensation de mouvement la redondance temporelle.

A l'autre bout de la chaîne, le décodeur réalise les opérations inverses pour transmettre les images décompressées au récepteur.

La compatibilité de ces codeurs avec les différents types de récepteurs existants ou à venir, ou leur décodeur associé, en particulier avec les différentes résolutions d'image qu'ils autorisent est un problème constant. En effet, les algorithmes de compression mis en oeuvre sont généralement orientés vers l'obtention d'un débit le plus faible possible pour une qualité d'image optimale en prenant en compte les redondances spatiales et temporelles de la séquence d'images.

Une solution consistant à transmettre les données correspondant à un récepteur de résolution la plus grande, les récepteurs ou décodeurs associés de résolution inférieure ne sélectionnant que les données nécessaires à leur propre résolution est connue. Les circuits du codeur sont choisis et configurés de manière à traiter les données numériques vidéo correspondant à une image de plus haute résolution. L'image est découpée en blocs d'images, la transformation cosinus discrète est effectuée sur le bloc d'image courant ou le bloc résidu défini plus loin, les coefficients obtenus sont quantifiés. Une quantification inverse et une transformation cosinus discrète inverse sont ensuite effectuées sur ces coefficients quantifiés pour reconstruire le bloc d'image. L'image est reconstruite à partir de la mémorisation de ces blocs. Elle est ensuite compensée en mouvement pour fournir une image prédite ou compensée en mouvement. Le bloc courant est comparé au bloc correspondant de l'image prédite pour définir le type de codage selon un critère énergétique. Il s'agit par exemple du codage intra du bloc courant ou du codage inter de la différence entre le bloc courant et le bloc prédit, appelé bloc résidu.

Les opérations correspondantes sont effectuées au niveau du décodeur.

Le décodeur réalise une quantification inverse et une transformation cosinus discrète inverse des données numériques reçues pour reconstruire le bloc d'image puis l'image complète. Dans le cas où le décodeur fournit au récepteur auquel il est branché, une image de plus faible résolution que celle codée au codeur, par exemple parce qu'il est relié à un récepteur de plus faible résolution, tous les coefficients d'un bloc d'image ne sont pas traités. Le décodeur ne sélectionne que les coefficients nécessaires à sa résolution ou bien reconstruit une image de résolution celle du récepteur auquel il est branché, abandonnant les coefficients de plus haute fréquence. L'image reconstruite au décodeur est donc de résolution, celle du décodeur. Pour reconstituer le bloc courant, un bloc de cette image de plus faible résolution est comparé à un bloc de résidu transmis par le codeur. Apparaît alors un phénomène bien connu appelé dérive ou "drift" en anglo-saxon, provenant du fait que l'image reconstruite au décodeur n'est pas de même résolution que celle reconstruite au codeur. Le bloc d'image reconstruit rajouté au bloc de résidu reçu par le décodeur diffère légèrement de celui retranché au codeur pour calculer ce bloc de résidu, cette dérive s'amplifiant au fur et à mesure du traitement des images codées en inter. La qualité de l'image en sortie du décodeur se dégrade en conséquence.

Afin de pouvoir conserver une compatibilité du codeur avec les différents types de décodeurs de résolution différente, il n'est généralement pas possible de réaliser un codage spécifique à chaque résolution. La solution est d'effectuer un codage correspondant à la résolution maximale, ce codage étant exploité par tous le décodeurs, quelle que soit leur résolution, entraînant par là même ce phénomène de dérive et de dégradation non maîtrisée de la qualité de l'image.

Le document signal processing of HDTV, IV Proceedings of the international workshop, Kawasaki, Japan, 18-20 November 1992 pg 569-577, Schamel G." Graceful degradation and scalability in digital coding terrestrial Transmission" décrit un codage spécifique à chaque résolution, par l'exploitation de plusieurs boucles de codage, pour résoudre le problème de dérive. Ce procédé est ni simple ni souple de sa mise en oeuvre, un boucle de codage étant nécessaire par type de décodeur, c'est à dire par résolution, qu'il est nécessaire de connaître à priori. Il est également difficile d'établir un compromis entre perte de qualité de l'image due à la dérive et perte de qualité de l'image due à la perte de résolution, pour un débit donné.

L'invention décrite ci-après a pour but de pallier les inconvénients précités.

A cet effet, l'invention a pour objet un procédé de prédiction compensée en mouvement pour le codage de données numériques d'une image vidéo, codage comprenant un découpage de l'image en blocs d'images, un codage d'un bloc résidu à partir d'un calcul de la différence entre un bloc courant et un bloc prédit, le bloc prédit étant obtenu après compensation en mouvement d'un ou plusieurs blocs reconstruits, caractérisé en ce que le bloc courant et le bloc prédit sont des blocs de coefficients obtenus après transformation cosinus discrète des blocs d'image et en ce que le calcul des coefficients prédits du bloc de coefficients prédit est effectué directement à partir des coefficients reconstruits d'un ou plusieurs blocs de coefficients reconstruits, cette reconstruction étant effectuée à partir de l'addition d'un bloc de résidu au bloc prédit correspondant, en pondérant les coefficients reconstruits en fonction du coefficient prédit calculé.

Elle a également pour objet un encodeur de données vidéo numériques constitué d'un circuit de découpage de l'image en blocs d'images, un circuit de transformation cosinus discrète de ces blocs pour fournir des blocs de coefficients, une boucle de prédiction comportant un circuit de compensation en mouvement, caractérisé en ce qu'il comporte également un circuit de calcul de la différence entre un bloc de coefficients courant et un bloc de coefficients prédit pour fournir un bloc de coefficients résidu et en ce que le circuit de compensation en mouvement calcule directement des coefficients du bloc de coefficients prédit à partir des coefficients d'un ou plusieurs blocs de coefficients reconstruits, cette reconstruction étant effectuée à partir de l'addition d'un bloc de résidu au bloc prédit correspondant, en pondérant les coefficients reconstruits en fonction du coefficient prédit calculé.

L'invention a aussi pour objet un décodeur de données vidéo numériques pour le décodage de blocs de coefficients résidus codés par un encodeur du type précédent, caractérisé en ce qu'il comprend une boucle de prédiction comportant un circuit de compensation en mouvement calculant un bloc de coefficients prédit directement à partir d'un ou plusieurs blocs de coefficients reconstruits, un circuit de calcul de la somme d'un bloc de coefficients résidu reçu avec un bloc de coefficients prédit pour fournir un bloc de coefficients reconstruit.

Selon l'invention, une pondération des coefficients reconstruits permet de calculer les coefficients du bloc prédit directement à partir de ces coefficients reconstruits.

Cette pondération peut être une sélection de ces coefficients, ne prenant en compte que les coefficients de rang de fréquence égal ou inférieur à celui du coefficient prédit calculé. Alors, un codeur peut traiter un nombre quelconque de coefficients sans que le phénomène de dérive apparaisse. La compatibilité multirésolution est ainsi conservée tout en supprimant le phénomène de dérive de l'image.

Les coefficients peuvent être groupés en niveaux de qualité d'image. Cette pondération peut alors être une sélection des coefficients du groupe auquel appartient le coefficient prédit calculé.

Un avantage de l'invention est ainsi, en définissant au niveau du codeur différents niveaux de qualité d'image en fonction des différents types de décodeurs utilisés, de permettre de limiter la perte de qualité de l'image pour un nombre donné de coefficients traités au décodeur.

En pondérant les coefficients de rang de fréquence supérieur au lieu de les éliminer, il est possible de choisir le meilleur compromis entre la perte de qualité de l'image due à la dérive et la diminution de qualité de l'image due à l'abandon des coefficients de rang de fréquence supérieur.

L'invention sera mieux comprise à l'aide de la description et des figures qui suivent qui représentent :

- la figure 1, un codeur selon l'invention ;
- la figure 2, les étapes de calcul d'un bloc prédit en exploitant la norme MPEG2 ;
- la figure 3, les coefficients reconstruits sélectionnés pour le calcul d'un coefficient prédit ;
- la figure 4, les coefficients et luminances utilisés pour le calcul des coefficients d'un bloc prédit en exploitant la norme MPEG2 ;
- la figure 5, les coefficients reconstruits sélectionnés pour le calcul d'un coefficient prédit, selon l'invention ;
- la figure 6, différents types de niveaux de qualité de l'image ;
- la figure 7, un décodeur selon l'invention.

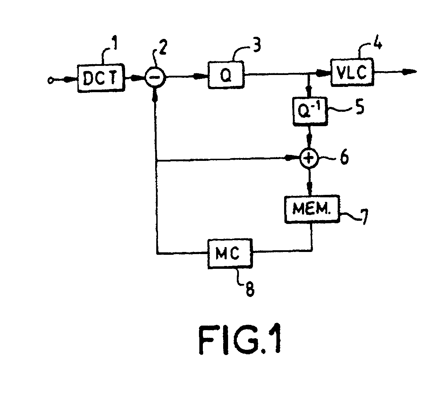

Un exemple de réalisation du codeur selon l'invention est donné à la figure 1 pour le cas d'un codage de type inter, l'extension aux autres types de codage, par exemple le type bidirectionnel de la norme MPEG, ne présentant pas de difficulté.

Les informations numériques représentatives d'une image vidéo sont transmises à l'entrée du codeur, sur l'entrée d'un circuit classique de Transformation Cosinus Discrète 1 aussi appelé DCT.

La sortie de ce circuit est reliée à une première entrée d'un circuit soustracteur 2. La sortie du circuit soustracteur est branchée sur l'entrée d'un circuit quantificateur 3. La sortie de ce dernier est quant à elle reliée à l'entrée d'un circuit de codage à longueur variable 4 ou CLV, la sortie de ce circuit étant la sortie de l'encodeur fournissant le flux de données codées.

La sortie du quantificateur 3 est également reliée à l'entrée d'un quantificateur inverse 5. La sortie du quantificateur inverse est reliée à une première entrée d'un circuit additionneur 6. La sortie de l'additionneur est reliée à l'entrée d'une mémoire 7. La sortie de la mémoire est reliée à un circuit de compensation en mouvement dans le domaine temporel 8. La sortie de ce circuit est reliée à la deuxième entrée du soustracteur 2 ainsi qu'à la deuxième entrée de l'additionneur 6.

Plutôt que de réaliser une Transformation Cosinus Discrète sur la différence entre les valeurs de luminance du bloc d'image courant et du bloc d'images prédit, comme cela est réalisé dans la norme MPEG 2, l'invention réalise ici d'abord une Transformation Cosinus Discrète du bloc d'image courant transmis à l'entrée de l'encodeur puis ensuite une différence entre le bloc courant de coefficients et le bloc prédit de coefficients.

Le bloc d'image en entrée de l'encodeur est transformé en un bloc de coefficients grâce au circuit de Transformation Cosinus Discrète 1 qui permet de passer du domaine spatial au domaine fréquentiel. Une différence est effectuée entre ce bloc de coefficients et le bloc de coefficients que l'on appellera prédit et provenant d'une boucle de prédiction. Cette différence fournit un bloc de coefficients que l'on appellera bloc de coefficients résidu.

Une quantification est effectuée sur ce bloc ainsi qu'une pondération et un balayage en zigzag permettant de sérialiser les données grâce au circuit de quantification 3. Un codage entropique est enfin réalisé sur le flot de données transmis par le quantificateur par l'intermédiaire du circuit de codage à longueur variable 4. Le flux de données codé est transmis en sortie de l'encodeur.

Les opérations inverses de celles réalisées par le circuit de quantification 3 sont effectuées par le circuit de quantification inverse 5. Ainsi, en entrée du circuit d'addition 6 est transmis un bloc de coefficients résidu reconstruit. A ce bloc de résidu est rajouté, grâce à l'additionneur 6, le bloc de coefficients prédit ayant servi au calcul du bloc de coefficients résidu. Le bloc de coefficients reconstruit obtenu par cette addition est ensuite mémorisé dans une mémoire 7. Lorsque tous les blocs d'une image ont été transmis à l'entrée du codeur, la mémoire contient alors l'ensemble des blocs de coefficients reconstruits de cette image. Ces blocs sont envoyés vers le circuit de compensation en mouvement dans le domaine fréquentiel 8 qui, à partir des blocs de coefficients reconstruits calcule les blocs de coefficients prédits.

Lorsqu'un bloc courant d'une image est transformé puis transmis sur la première entrée du soustracteur 2, un circuit d'estimation de mouvement, non représenté sur la figure, calcule le bloc correspondant de l'image précédente qui est le mieux corrélé avec le bloc de l'image courante selon par exemple une méthode classique d'appariement par bloc plus connue sous l'appellation anglo-saxonne de "block matching". Un vecteur mouvement en est déduit qui définit le bloc ou portion de l'image précédente à apparier au bloc de l'image courante.

Ce vecteur mouvement affecté au bloc courant est transmis au circuit de compensation en mouvement 8 qui va alors rechercher dans les blocs reconstruits de l'image précédente mémorisés, le ou les blocs utiles pour le calcul du bloc de coefficients prédit correspondant au bloc courant déplacé du vecteur mouvement. Ce bloc de coefficients prédit est soustrait au bloc de coefficients courant, par l'intermédiaire du soustracteur 2, pour fournir le bloc de coefficients de résidu. Le bloc de coefficients prédit est aussi celui qui est ajouté au bloc de coefficients résidu reconstitué, par l'intermédiaire de l'additionneur 6, pour fournir le bloc de coefficients reconstruit mémorisé dans la mémoire 7.

Le circuit de compensation en mouvement 8 forme, avec le circuit de mémorisation, la boucle de prédiction.

Afin de bien comprendre les fonctions du circuit de compensation en mouvement 8 selon l'invention, il est nécessaire d'étudier dans un premier temps le fonctionnement d'un tel circuit dans le cas où ce dernier exploiterait un procédé de compensation en mouvement selon la norme MPEG 2, c'est à dire appliqué à une image dans le domaine spatial.

En faisant cette hypothèse, les blocs reconstruits transmis à l'entrée du circuit de compensation en mouvement étant des blocs de coefficients, ces derniers subissent une transformation cosinus discrète inverse pour donner une image dans le domaine spatial. Cette image est ensuite compensée en mouvement puis une transformation cosinus discrète est effectuée sur l'image compensée en mouvement pour fournir un bloc de coefficients prédit.

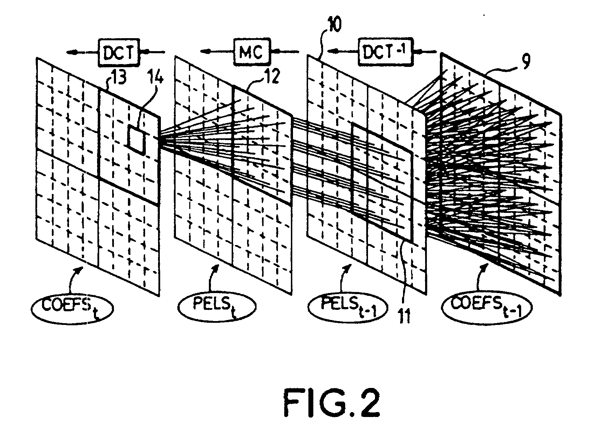

La figure 2 représente, au niveau de l'image, ces différentes étapes.

Sur cette figure, seuls sont représentés un bloc de l'image prédite et les 4 blocs de l'image reconstruite. Par simplification également, on raisonne sur des blocs de 4x4 coefficients, l'extrapolation à des blocs de 64 coefficients se faisant sans problème.

Ainsi, l'image appelée fréquentielle 9 définie par les 4 blocs de 4x4 coefficients et disponible en sortie de la mémoire 7 subit une transformation cosinus discrète inverse pour donner une image spatiale 10 constituée de 8x8 pixels. Une portion d'image 11 de 4x4 pixels, c'est à dire de la dimension d'un bloc d'image, définie par le vecteur mouvement et l'emplacement du bloc courant de l'image courante traitée est déplacée de la valeur du vecteur mouvement pour fournir le bloc d'image prédit de 4x4 pixels 12 de l'image prédite. Ce bloc d'image prédit 12 sortant du circuit de compensation en mouvement de type MPEG2 subit une transformation cosinus discrète directe pour donner le bloc de coefficients prédit 13 constitué de 4x4 coefficients prédits 14.

Chaque coefficient prédit 14 est une somme pondérée des valeurs de luminance de tous les pixels constituant le bloc d'image prédit 12 de par la définition de la transformée cosinus discrète. A son tour, la valeur de luminance d'un pixel de la portion d'image 11 est définie à partir des 4x4 coefficients du bloc de coefficients correspondant au bloc d'image lié au pixel dont la luminance est calculée. A la figure 2, la portion d'image 11 chevauchant les 4 blocs d'image constituant l'image 10, les 8x8 coefficients de l'image fréquentielle 9 sont concernés par le calcul des luminances de cette portion d'image 11.

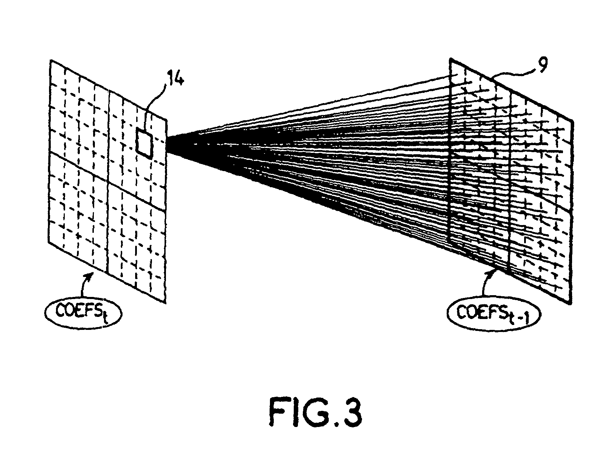

Ainsi, le calcul d'un coefficient 14 d'un bloc de coefficients prédit 13 exploite, dans l'exemple, la totalité des coefficients des 4 blocs de l'image précédente fréquentielle reconstruite chevauchant la portion d'image 11. Ceci est représenté par la figure 3 qui symbolise le calcul d'un coefficient prédit 14 à partir des coefficients reconstruits 9.

Le raisonnement mathématique qui suit est fait en supposant le modèle unidimensionnel et le déplacement du bloc défini par le vecteur mouvement de pas le pixel.

Les coefficients prédits d'un bloc i sont obtenus à partir du bloc d'image prédit correspondant en appliquant la transformation cosinus discrète.

Soit $f'_{i,x}$ la valeur de luminance d'un pixel x de ce bloc d'image i. Soit $F_{i,u}$ la valeur du coefficient de rang de fréquence u du bloc de coefficients correspondant au bloc d'image i.

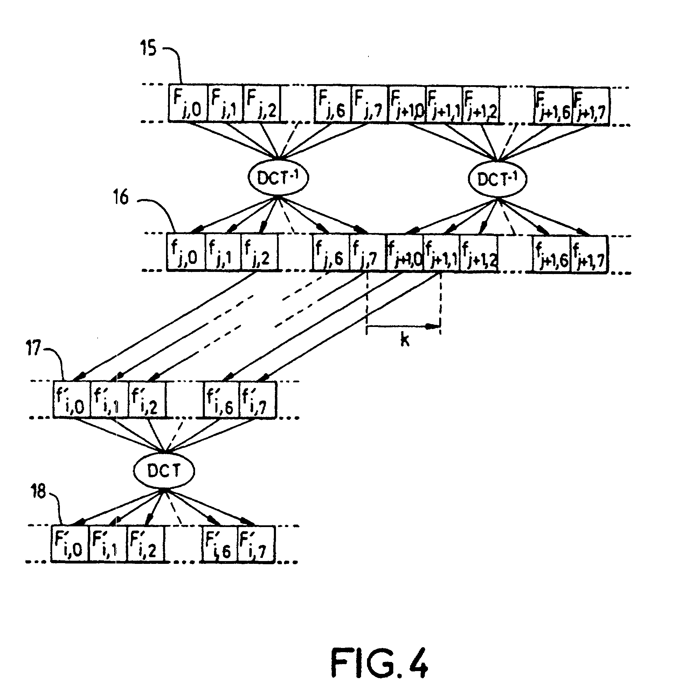

La figure 4 représente ces différents coefficients.

Deux blocs de 8 coefficients j et j+ 1 correspondant à un instant t-1 sont symbolisés par le bandeau 15. De même, les blocs d'image j et j+ 1 déduits de ces blocs de coefficients par le calcul de la transformée cosinus discrète inverse sont représentés en 16.

Le bloc d'image prédit i correspondant au bloc courant à l'instant t est représenté en 17. Ce bloc subit une transformation cosinus discrète pour fournir le bloc de coefficients prédits représenté en 18.

Ce bloc 17 est déduit de la portion d'image correspondant à la position du bloc courant déplacé d'un vecteur mouvement de dimension v calculé pour ce bloc courant. Dans l'exemple illustré, le déplacement inverse correspond au passage du bloc i au bloc j avec recouvrement sur le bloc j + 1 de k pixels.

On a l'équation suivante, correspondant à l'opération DCT inverse :

$$F'_{i,u} = \sum_{x=0}^{7} A_{x,u} \cdot f'_{i,x}$$

avec :

$$A_{x,u} = \cos[\pi(2x + 1).u/16]/2$$

avec u positif et $A_{x,0} = 1/2 \sqrt{2}$

Dans le cas général, le bloc i est prédit à partir d'une zone chevauchant deux blocs j et j + 1 :

$f'_{i,x}=f_{j,x+k}$ si x inférieur ou égal à 7-k
$f'_{i,x}=f_{j+1,x-k}$ si x supérieur à 7-k
j et k sont fonction de la composante du vecteur mouvement dans la direction considérée, v.
j = i + v/8 où la division est Euclidienne
k = v-8(j-i).
k est le reste de la division et représente donc le recouvrement.

Ainsi l'équation précédente peut s'écrire :

$$F'_{i,u} = \sum_{x=k}^{7} A_{x-k,u} \cdot f'_{j,x} + \sum_{x=0}^{k+1} A_{x-k+8,u} \cdot f'_{j+1,x}$$

La valeur des pixels est obtenue par la transformée cosinus discrète inverse :

$$f_{j,x} = \sum_{v=0}^{7} A_{x,v} \cdot F_{j,v}$$

ce qui nous donne :

$$F'_{i,u} = \sum_{x=k}^{7} A_{x-k,u} \cdot \sum_{v=0}^{7} A_{x,v} \cdot F_{j,v} + \sum_{x=0}^{k+1} A_{x-k+8,u} \cdot \sum_{v=0}^{7} A_{x,v} \cdot F_{j+1,v}$$

$$= \sum_{v=0}^{7} (\sum_{x=k}^{7} A_{x-k,u} \cdot A_{x,v}) \cdot F_{j,v} + \sum_{v=0}^{7} (\sum_{x=0}^{k+1} A_{x-k+8,u} A_{x,v}) \cdot F_{j+1,v}$$

$$= \sum_{v=0}^{7} B_{u,v,k} \cdot F_{j,v} + \sum_{v=0}^{7} C_{u,v,k} \cdot F_{j+1,v}$$

en posant :

$$B_{u,v,k} = \sum_{x=k}^{7} A_{x-k,u} \cdot A_{x,v}$$

$$C_{u,v,k} = B_{v,u,8-k}$$

$$B_{u,v,8} = 0$$

$B_{u,v,k}$ est le facteur de contribution du coefficient $F_{j,v}$ pour la prédiction de $F'_{i,u}$ pour un déplacement d'un multiple de 8 plus k pixels.

Pour k=O, c'est à dire si le déplacement est un multiple de 8, le bloc prédit est une simple copie de celui qui est pointé par le vecteur mouvement.

Ce développement mathématique montre qu'il est tout à fait possible de calculer les coefficients prédits directement à partir des coefficients reconstruits, sans passer par l'étape intermédiaire de compensation en mouvement de l'image spatiale reconstruite. Le vecteur mouvement affecté au bloc courant permet de définir les blocs de coefficients reconstruits entrant dans le calcul du bloc de coefficients prédit.

On a vu précédemment, figure 2, que la prédiction d'un coefficient 14 correspondant à un rang de fréquence donné utilise des coefficients de plus haute fréquence dans l'image fréquentielle 9. Ceci entraîne, comme expliqué précédemment, un phénomène de dérive dans les décodeurs de plus faible résolution qui n'exploiteraient les coefficients de l'image que jusqu'à un certain rang de fréquence correspondant à cette résolution.

Une idée de l'invention est, au niveau de l'encodeur, de coder les différents coefficients du bloc prédit directement à partir des coefficients des blocs reconstruits en ne calculant un coefficient d'un rang de fréquence donné qu'à partir de coefficients de rang de fréquence inférieur ou égal.

La conséquence est une légère dégradation de l'image au niveau du décodeur lorsque celui-ci est pleine résolution, du fait de l'abandon des coefficients de plus haut rang de fréquence pour le calcul d'un coefficient d'un rang donné, mais la perte de qualité est ici contrôlée du fait de la disparition de la dérive telle que précédemment définie et n'augmente donc pas avec le temps.

Ce principe trouve une application dans l'exploitation simultanée de décodeurs de différents types de résolution ou bien des décodeurs de type sécurisés, c'est à dire d'une résolution donnée mais pouvant commuter vers une résolution moindre en cas de mauvaise réception des données. Le décodeur reçoit soit l'ensemble des coefficients et effectue le tri lui-même pour que les coefficients traités correspondent à la résolution nécessaire, par exemple parce qu'il s'agit d'un décodeur faible résolution bon marché qui ne peut pas traiter toutes les informations reçues ou parce que des données reçues ne sont pas correctes, soit reçoit qu'un certain nombre de coefficients précédemment filtrés.

Par exemple, seuls les coefficients de basse fréquence, qui sont ceux les plus porteurs d'information, sont protégés contre les erreurs. Dans de bonnes conditions de réception, le décodeur traite tous les coefficients reçus, dans de mauvaises conditions de réception, il ne traite que ceux protégés qu'il sera capable de reconstituer, laissant tomber les autres coefficients haute fréquence.

Dans des réseaux ATM, l'encodeur peut transmettre les données en donnant une haute priorité à des paquets transportant des coefficients basse fréquence, les paquets correspondant aux autres données pouvant ne pas être exploités ou transmis en cas de surcharge du réseau.

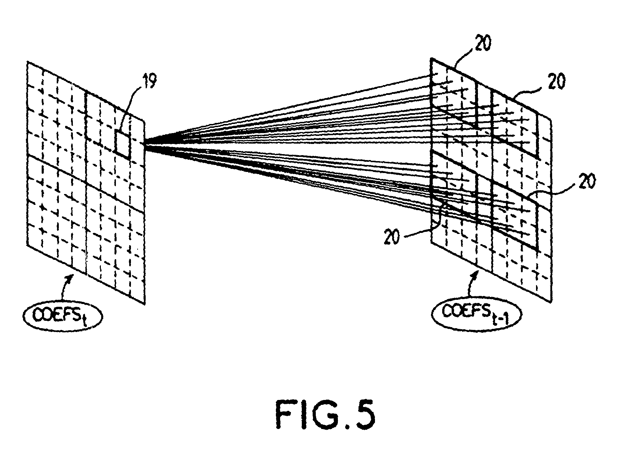

La figure 5, à rapprocher de la figure 3, représente, d'une manière schématique, le calcul des coefficients prédits à partir des coefficients reconstitués, calcul réalisé par le compensateur de mouvement selon l'invention.

Un coefficient 19 d'un bloc prédit est, dans cet exemple, calculé en fonction des coefficients reconstruits 20 de rang de fréquence égal ou inférieur de chacun des blocs de coefficient reconstruits définis par le vecteur mouvement.

La transcription mathématique est donnée par l'équation suivante dérivée de la précédente équation donnant $F'_{i,u}$.

$$F'_{i,u} = \sum_{v=0}^{u} B_{u,v,k} \cdot F_{j,v} + \sum_{v=0}^{u} C_{u,v,k} \cdot F_{j+1,v}$$

Le calcul du coefficient prédit $F'_{i,u}$ du bloc de coefficients i correspondant au bloc d'image i, coefficient de rang de fréquence u, est effectué en fonction des coefficients $F_{j,v}$ et $F_{j+1,v}$ des blocs de coefficients reconstruits dont le rang de fréquence v est inférieur ou égal à celui de u.

Le raisonnement est fait dans le cas d'un vecteur mouvement de résolution le pixel. Dans le cas plus général où le mouvement calculé par l'estimateur de mouvement est une fraction de l'espace inter-pixel, il suffit simplement de combiner l'équation précédente avec la formule d'interpolation. Par exemple avec une interpolation bilinéaire d'un demi-pixel, l'équation précédente devient :

$$F'_{i,u} = \sum_{v=0}^{u} \frac{1}{2}(B_{u,v,k} + B_{u,v,k+1}) \cdot F_{j,v} + \sum_{v=0}^{u} \frac{1}{2}(C_{u,v,k} + C_{u,v,k+1}) \cdot F_{j+1,v}$$

Grâce à cette technique, le décodeur peut choisir le rang de fréquence auquel il veut arrêter le décodage, permettant ainsi jusqu'à 64 niveaux de qualité pour des blocs de 64 coefficients. Ces niveaux sont appelés niveaux de qualité, la qualité de l'image obtenue après décodage étant fonction du nombre de coefficients utilisés pour le calcul du coefficient prédit. Ce choix du décodeur est effectué sans qu'il n'apparaisse aucun phénomène de dérive.

Une variante de l'invention consiste à définir un certain nombre de niveaux de qualité de l'image à l'encodeur.

Si les 64 niveaux ne sont pas nécessaires pour une application donnée, il est possible de réduire le nombre de niveaux et ainsi d'accroître la qualité de l'image en autorisant la prédiction de coefficients à partir de coefficients de plus haute fréquence, coefficients faisant par exemple partie d'un même groupe, les groupements de coefficients définissant les niveaux.

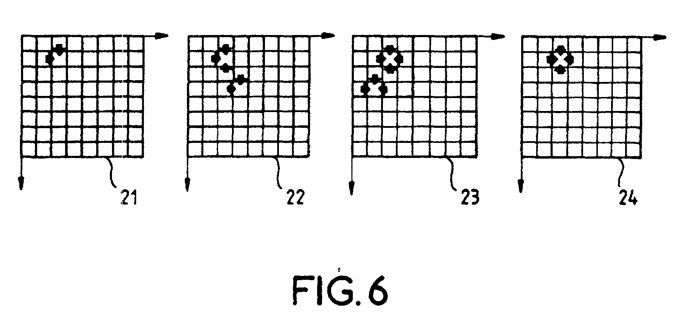

La figure 6 représente différents exemples de choix de niveaux de qualité. Il s'agit des 64 coefficients constituant un bloc de l'image dans le domaine fréquentiel, précédemment appelée image fréquentielle, c'est à dire après une transformation cosinus discrète du bloc d'image, l'axe des abscisses représentant les fréquences horizontales de l'image et l'axe des ordonnées les fréquences verticales. Les coefficients sont rangés en lignes et colonnes numérotées à partir de l'origine qui est le point supérieur gauche, les coefficients en haut et à gauche représentent les rangs de fréquence inférieure, le coefficient DC étant dans le coin supérieur gauche.

Les traits gras définissent la limite d'un niveau de qualité: un coefficient en dessus et à gauche de ce trait ne peut accéder au coefficients au dessous ou à droite.

L'image fréquentielle 21, constituée des 64 coefficients de fréquence permet 64 niveaux, chacun des 64 coefficients étant calculé à partir des coefficients de plus faible rang ou de rang égal, c'est à dire les coefficients de ligne et de colonne inférieure ou égale à celle du coefficient calculé. C'est le cas donné dans notre exemple de réalisation.

Les images fréquentielles 22 et 23 permettent respectivement 8 niveaux et 4 niveaux de qualité.

L'image fréquentielle 24 ne permet qu'un seul niveau de qualité, le calcul d'un coefficient prenant en compte tous les coefficients quelque soit leur rang de fréquence.

La qualité d'image est optimale dans ce dernier cas.

Le dernier niveau de qualité de l'image fréquentielle 23 donne quant à lui une qualité d'image supérieure au dernier niveau de l'image fréquentielle 22 du fait que les calculs de coefficients des niveaux inférieurs exploitent plus de coefficients de rang inférieurs.

La définition des niveaux est préalablement effectuée au codeur. Si les 64 niveaux de qualité ne sont pas nécessaires, le codeur peut très bien ne choisir par exemple que quatre niveaux. Les décodeurs donneront alors des images de meilleure qualité pour un même nombre de coefficients traités que si l'on avait conservé les 64 niveaux.

Par exemple un décodeur conçu pour ne traiter que les 16 premiers coefficients, c'est à dire ceux correspondant au niveau 1 à 3 pour l'image 23 ou niveau 1 à 4 pour l'image 22, donnera une image de meilleure qualité si l'encodeur calcule les coefficients à transmettre en fonction de ces niveaux au lieu de calculer chaque coefficient à partir des seuls coefficients de rang inférieur, ce dernier calcul donnant 64 niveaux de qualité non forcément utiles. L'encodeur peut bien sûr transmettre simultanément les autres coefficients correspondant à des niveaux inférieurs, le niveau 4 pour l'image 23, les niveaux 5 à 8 pour l'image 22. Ces niveaux sont exploités par des décodeurs correspondant à des récepteurs de meilleure résolution ou pour permettre des commutations en cours de fonctionnement, par exemple le passage à un niveau de qualité d'image supérieur lors d'une amélioration des conditions de réception des données comme expliqué précédemment.

Un décodeur d'un niveau de résolution donné et ne pouvant donc traiter qu'un nombre n de coefficients peut ainsi être conçu pour traiter différents niveaux de qualité de l'image, par exemple en fonction des conditions de réception, du moins les niveaux exploitant les coefficients de rang inférieur à n, c'est à dire traités par le décodeur.

Il est aussi tout à fait possible que la commutation d'un niveau à un autre soit décidée par le codeur pendant le codage, à partir du moment où l'information est transmise dans le flux de données reçues par le décodeur, par exemple de la même manière que l'encodeur transmet une matrice de pondération de quantification qui peut évoluer lors du codage. Ici, il s'agirait d'une matrice de contribution de 8x8 qui, pour chaque coefficient et à l'aide d'un code défini à l'avance, permettrait de dire si le coefficient prédit doit être calculé en fonction des coefficients de rang inférieur, des coefficients de rang supérieur à droite, etc.

Cette matrice serait transmise avec le flux de données comprimées pour être exploitée au décodeur.

L'invention permet donc de réaliser un premier compromis entre l'exploitation d'un codage à un seul niveau (image 24) donnant une image de la meilleure qualité pour un décodeur exploitant tous les coefficients transmis mais une dérive importante pour un décodeur bas de gamme et l'exploitation d'un codage à 64 niveaux (image 21) donnant une image légèrement dégradée mais sans dérive pour tout type de décodeur.

Un deuxième compromis est possible en pondérant les coefficients de rang de fréquence plus élevé pris en compte pour le calcul d'un coefficient prédit d'un rang de fréquence donné.

Le choix des contributions des coefficients reconstruits pour le calcul des coefficients prédits, au lieu d'être binaire, est pondéré: la prédiction d'un coefficient utilise l'ensemble des coefficients reconstruits (donc de l'image précédente) mais avec un facteur de contribution $B_{u,v,k}$ multiplié par une valeur entre 0 et 1 si $v>u$ et égale à 1 si $v$ est inférieur ou égal à $u$.

Ainsi, pour un décodeur exploitant la totalité des coefficients calculés avec des pondérations, l'image sera légèrement dégradée du fait que les coefficients ne sont pas intégralement exploités à l'encodeur du fait de cette pondération, mais pour un décodeur exploitant une partie des coefficients, la dérive sera réduite car les coefficients de rang plus élevé ne sont que partiellement exploités à l'encodeur, du fait également de la pondération.

Les facteurs de contribution $B_{u,v,k}$ sont calculés une fois pour toutes et mémorisés dans des tables. Des symétries sont exploitées pour réduire le nombre de données à mémoriser. Le circuit de compensation en mouvement 8 de la figure 1 réalise entre autres, des multiplications matricielles pour le calcul des coefficients prédits selon les équations précédemment écrites.

Il est bien sûr possible de combiner le groupement de coefficients en niveaux de qualité d'image et la pondération en réalisant celle-ci en fonction des coefficients appartenant à des groupes de niveaux de qualité donnés.

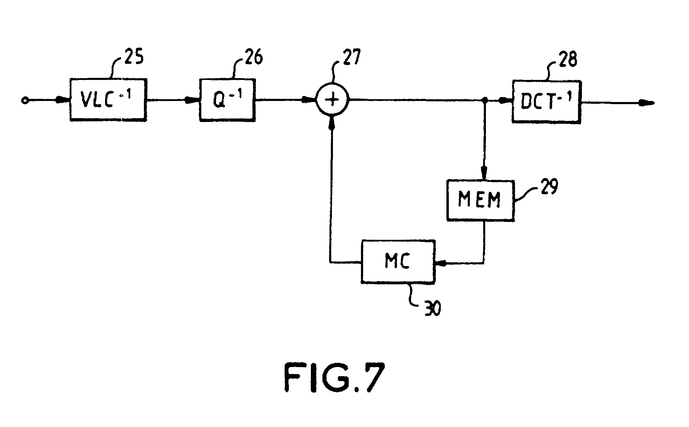

Un exemple de réalisation de décodeur mettant en oeuvre l'invention est représenté à la figure 7.

Le flux de données transmises par l'encodeur est reçu sur l'entrée du décodeur qui est également l'entrée d'un circuit de décodage en longueur variable 25. Les données sont ensuite transmises à un déquantificateur 26 dont la sortie est reliée à une première entrée d'un additionneur 27. La sortie de l'additionneur est reliée à un circuit de transformation cosinus discrète inverse 28 dont la sortie est la sortie de la partie décodeur étudiée ici ainsi qu'à un circuit de mémorisation 29. La sortie de ce circuit est reliée à un circuit de compensation en mouvement dans le domaine fréquentiel 30. La sortie de ce circuit est branchée sur la deuxième entrée de l'additionneur 27.

Le circuit de décodage 25 reçoit les données de l'encodeur qu'il décode et sélectionne, entre autres, selon le ou les niveaux de résolution du décodeur. Le déquantificateur 26 transmet sur la première entrée de l'additionneur 27 le bloc courant résidu de coefficients déquantifiés. Le bloc prédit est reçu sur la deuxième entrée et l'additionneur fournit en sa sortie le bloc courant de coefficients reconstruit. Après une transformation cosinus discrète inverse de ce bloc par le circuit IDCT 28, le bloc d'image courant est reconstitué et transmis vers une mémoire d'image non représentée sur la figure puis vers le récepteur.

Cette image est seulement destinée à l'affichage et n'intervient pas dans le décodage des images suivantes. Ses caractéristiques sont donc libres, ce qui permet de choisir entre la qualité et la résolution. Considérons par exemple un décodeur qui ne prenne en compte que les 16 coefficients de plus basse fréquence parmi les 64 coefficients traités par l'encodeur. L'image affichée peut être de la même résolution, mais de qualité inférieure à celle de l'encodeur en utilisant une transformation cosinus discrète inverse 8x8 avec des valeurs nulles pour les coefficients manquants. Ou bien cette image peut être de résolution inférieure en utilisant une transformation cosinus discrète inverse 4x4.

Les blocs de coefficients reconstruits sont mémorisés au niveau de l'image dans une mémoire 29. Il s'agit des seuls coefficients exploités par le décodeur, nombre fonction du niveau de résolution du décodeur.

La compensation en mouvement est effectuée de la même manière que dans l'encodeur c'est à dire que le calcul d'un coefficient prédit ne prend en compte que les coefficients reconstruits de rang de fréquence inférieur ou égal à celui calculé, si tel est le cas au niveau de l'encodeur.

Les coefficients du bloc prédit sont ainsi calculés à partir des coefficients des blocs reconstruits, blocs définis par le vecteur mouvement et le bloc courant. Ces coefficients reconstruits sont ceux correspondant à la résolution du décodeur, les coefficients de rang de fréquence supérieur ayant été abandonnés.

Les coefficients reconstruits pris en compte peuvent également être ceux correspondant à un niveau de qualité donné préalablement défini à l'encodeur. Ce sont alors tous les coefficients relatifs au niveau de qualité traité par le décodeur qui sont pris en compte.

Lorsque l'encodeur exploite un seul niveau de qualité, c'est à dire calcule un coefficient prédit à partir de l'ensemble des 64 coefficients reconstruits, cas de l'image fréquentielle 24, la compatibilité avec un décodeur MPEG2 est conservée.

## Revendications

1. Procédé de codage de données numériques d'une image vidéo comprenant un découpage de l'image en blocs d'images, une estimation de mouvement d'un bloc d'image, une transformation cosinus discrète (1) du bloc d'image pour donner un bloc courant de coefficients, une quantification (3) d'un bloc résidu obtenu à partir d'un calcul de la différence (2) entre le bloc courant et un bloc prédit, une déquantification (5) du bloc résidu quantifié et une addition (6) au bloc prédit pour fournir un bloc de coefficients reconstruit, **caractérisé en ce qu'**il mémorise (7) les blocs de coefficients reconstruits, **en ce qu'**il réalise une compensation en mouvement (8) des blocs reconstruits à partir de l'estimation de mouvement et **en ce qu'**il calcule (8) les coefficients du bloc de coefficients prédits par combinaison linéaire de coefficients des blocs reconstruits compensés chevauchant le bloc prédit, en pondérant les coefficients reconstruits en fonction des coefficients prédits, calculés.

2. Procédé selon la revendication 1, **caractérisé en ce que** la pondération pour chaque coefficient reconstruit est une sélection, c'est à dire est nulle ou égale à l'unité.

3. Procédé selon la revendication 2, **caractérisé en ce que** la sélection consiste à ne prendre en compte que les coefficients d'un rang de fréquence inférieur ou égal à celui du coefficient prédit calculé.

4. Procédé selon la revendication 1, **caractérisé en ce que** la pondération est inférieure à l'unité pour les seuls coefficients reconstruits de rang de fréquence supérieur au coefficient prédit calculé.

5. Procédé selon la revendication 1, **caractérisé en ce que** des niveaux de qualité d'une image sont définis par des groupements de coefficients d'un bloc de coefficients, les niveaux supérieurs de qualité prenant en compte des coefficients de rang de fréquence supérieur, et **en ce que** la pondération est égale à l'unité pour les coefficients correspondant au niveau de qualité du coefficient prédit calculé.

6. Procédé selon la revendication 5, **caractérisé en ce que** la pondération est égale à zéro pour les coefficients correspondant à un niveau de qualité supérieur à celui du coefficient prédit calculé.

7. Encodeur de données numériques pour le codage d'une image vidéo selon le procédé de la revendication 1, comprenant un circuit de découpage de l'image en blocs d'image, un estimateur de mouvement d'un bloc d'image fournissant une estimation en mouvement, un circuit de transformation cosinus discrète (1) du bloc d'image pour fournir un bloc courant de coefficients, un soustracteur (2) d'un bloc prédit au bloc courant pour fournir un bloc résidu, un circuit de quantification (3) du bloc résidu, un circuit de quantification inverse (5) du bloc résidu quantifié, un additionneur (6) du bloc déquantifié au bloc prédit pour fournir un bloc reconstruit, **caractérisé en ce qu'**il comporte également une mémoire (7) pour mémoriser les blocs reconstruits, un compensateur en mouvement (8) des blocs reconstruits mémorisés pour compenser ces blocs à partir de l'estimation en mouvement, un circuit de calcul (8) des coefficients prédits par combinaison linéaire de coefficients des blocs reconstruits compensés chevauchant le bloc prédit, en pondérant les coefficients reconstruits en fonction des coefficients prédits calculés.

8. Décodeur de données numériques codées selon le procédé de la revendication 1 comprenant un circuit de quantification inverse (26) recevant un bloc résidu quantifié, un sommateur (27) pour ajouter un bloc prédit au bloc résidu déquantifié pour fournir un bloc reconstruit, **caractérisé en ce qu'**il comprend également une mémoire (29) pour mémoriser les blocs reconstruits, un compensateur de mouvement (30) des blocs reconstruits mémorisés à partir de l'estimation en mouvement, un circuit de calcul (30) des coefficients d'un bloc prédit par combinaison linéaire des coefficients de blocs reconstruits compensés chevauchant le bloc prédit, en pondérant des coefficients reconstruits, et un circuit de transformation cosinus discrète inverse (28) du bloc reconstruit pour fournir une image décodée.

9. Décodeur selon la revendication 8, **caractérisé en ce que** la pondération est une sélection des seuls coefficients de rang de fréquence inférieur ou egal à celui du coefficient prédit calculé.

10. Décodeur selon la revendication 8, **caractérisé en ce que** les valeurs de pondération pour le calcul des coefficients prédits sont des données numériques appartenant au flux de données numériques reçu par le décodeur.

11. Décodeur selon la revendication 8, **caractérisé en ce que** le circuit de transformation cosinus discrète inverse (28) effectue la transformation sur des blocs dont la dimension est limitée au nombre de coefficients correspondant à la résolution du décodeur.

12. Procédé de transmission de données numériques comprenant la transmission d'une matrice de contribution, avec dimension celle d'un bloc de coefficients, et dont chaque élément de cette matrice représente la pondération du coefficient reconstruit correspondant pour le calcul d'un coefficient prédit, et la transmission de données numériques qui sont capables d'être décodées utilisant ladite matrice par le décodeur selon la revendication 8.

**Claims**

1. Process for coding digital data of a video image comprising a partitioning of the image into image blocks, an estimation of motion of an image block, a discrete cosine transformation (1) of the image block so as to give a current block of coefficients, a quantization (3) of a residual block obtained from a calculation of the difference (2) between the current block and a predicted block, a dequantization (5) of the quantized residual block and an addition (6) to the predicted block so as to provide a reconstructed block of coefficients, **characterized in that** it stores (7) the reconstructed blocks of coefficients, **in that** it carries out a motion compensation (8) of the reconstructed blocks on the basis of the estimation of motion and **in that** it calculates (8) the coefficients of the block of predicted coefficients by linear combination of coefficients of the compensated reconstructed blocks overlapping the predicted block, by weighting the reconstructed coefficients according to the calculated predicted coefficients.

2. Process according to Claim 1, **characterized in that** the weighting for each reconstructed coefficient is a selection, that is to say is zero or equal to one.

3. Process according to Claim 2, **characterized in that** the selection consists in taking into account only the coefficients of a frequency rank which is less than or equal to that of the calculated predicted coefficient.

4. Process according to Claim 1, **characterized in that** the weighting is less than one just for the reconstructed coefficients of frequency rank greater than the calculated predicted coefficient.

5. Process according to Claim 1, **characterized in that** levels of quality of an image are defined by groupings of coefficients of a block of coefficients, the higher levels of quality taking into account coefficients of higher frequency rank, and **in that** the weighting is equal to one for the coefficients corresponding to the level of quality of the calculated predicted coefficient.

6. Process according to Claim 5, **characterized in that** the weighting is equal to zero for the coefficients corresponding to a level of quality greater than that of the calculated predicted coefficient.

7. Encoder of digital data for the coding of a video image according to the process of Claim 1, comprising a circuit for partitioning the image into image blocks, an estimator of motion of an image block providing a motion estimation, a circuit for discrete cosine transformation (1) of the image block so as to provide a current block of coefficients, a subtractor (2) of a predicted block from the current block so as to provide a residual block, a circuit (3) for quantization of the residual block, a circuit (5) for inverse quantization of the quantized residual block, an adder (6) of the dequantized block to the predicted block so as to provide a reconstructed block, **characterized in that** it also comprises a memory (7) for storing the reconstructed blocks, a motion compensator (8) for the stored reconstructed blocks for compensating these blocks on the basis of the motion estimation, a circuit (8) for calculating the predicted coefficients by linear combination of coefficients of the compensated reconstructed blocks overlapping the predicted block, by weighting the reconstructed coefficients according to the calculated predicted coefficients.

8. Decoder of coded digital data according to the process of Claim 1 comprising an inverse quantization circuit (26) receiving a quantized residual block, an adder (27) for adding a predicted block to the dequantized residual block so as to provide a reconstructed block, **characterized in that** it also comprises a memory (29) for storing the reconstructed blocks, a motion compensator (30) for the stored reconstructed blocks based on the motion estimation, a circuit (30) for calculating the coefficients of a predicted block by linear combination of the compensated reconstructed blocks overlapping the predicted block, by weighting reconstructed coefficients, and a circuit for the inverse discrete cosine transformation (28) of the reconstructed block so as to provide a decoded image

9. Decoder according to Claim 8, **characterized in that** the weighting is a selection of just the coefficients of frequency rank equal or less than that of the calculated predicted coefficient.

10. Decoder according to Claim 8, **characterized in that** the weighting values for calculating the predicted coefficients are digital data belonging to the stream of digital data received by the decoder.

11. Decoder according to Claim 8, **characterized in that** the inverse discrete cosine transformation circuit (28) performs the transformation on blocks whose dimension is limited to the number of coefficients corresponding to the resolution of the decoder.

12. Process for transmitting digital data comprising the transmission of a contribution matrix, with dimension that of a block of coefficients, and which each element of the matrix represents the weighting of the corresponding reconstructed coefficient for the calculation of a predicted coefficient, and the transmission of digital data which are able to be decoded by using said matrix by the decoder according to claim 8.

**Patentansprüche**

1. Verfahren zur Kodierung von digitalen Daten eines Videosignals mit einer Aufteilung des Bildes in Bildblöcke, einer Bewegungsschätzung eines Bildblocks, einer diskreten Cosinustransformation (1) des Bildblocks zur Lieferung eines laufenden Blocks von Koeffizienten, einer Quantisierung (3) eines Restblocks aus einer Berechnung der Differenz (2) zwischen dem laufenden Block und einem vorausgesagten Block, einer Dequantisierung (5) des quantisierten Restblocks und einer Addition (6) zu dem vorausgesagten Block zur Bildung eines rekonstruierten Blocks von Koeffizienten,
**dadurch gekennzeichnet, daß**
es die rekonstruierten Blöcke von Koeffizienten speichert (7), daß es eine Bewegungskompensation (8) der rekonstruierten Blöcke aus der Bewegungsschätzung durchführt und daß es die Koeffizienten des Blocks von vorausgesagten Koeffzienten durch eine lineare Kombination von Koeffizienten der kompensierten, rekonstruierten Blöcke berechnet (8), die den vorausgesagten Block überlappen, durch Wichtung der rekonstruierten Koeffizienten in Abhängigkeit von vorausgesagten, berechneten Koeffizienten.

2. Verfahren nach Anspruch 1, **dadurch gekennzeichnet, daß** die Wichtung für jeden rekonstruierten Koeffizienten eine Selektion ist, das heißt null oder gleich eins ist.

3. Verfahren nach Anspruch 2, **dadurch gekennzeichnet, daß** die Selektion darin besteht, daß nur die Koeffizienten eines Frequenzrangs berücksichtigt werden, der kleiner oder gleich demjenigen des berechneten, vorausgesagten Koeffizienten ist.

4. Verfahren nach Anspruch 1, **dadurch gekennzeichnet, daß** die Wichtung unterhalb eins nur für die rekonstruierten Koeffizienten des Frequenzrangs größer als ein berechneter, vorausgesagter Koeffizient durchgeführt wird.

5. Verfahren nach Anspruch 1, **dadurch gekennzeichnet, daß** Werte für die Qualität eines Bildes durch Gruppierungen von Koeffizienten eines Blocks von Koeffizienten definiert werden, daß die höheren Qualitätswerte Koeffizienten eines höheren Frequenzrangs berücksichtigen und daß die Wichtung für die Koeffizienten, die dem Qualitätswert des berechneten vorausgesagten Koeffizienten entsprechen, gleich eins ist.

6. Verfahren nach Anspruch 5, **dadurch gekennzeichnet, daß** die Wichtung für die Koeffizienten, die einem Qualitätswert größer als dem des berechneten, vorausgesagten Koeffizienten entsprechen, gleich null ist.

7. Koder für digitale Daten für die Kodierung eines Videobildes nach Anspruch 1 mit einer Schaltung zur Aufteilung des Bildes in Bildblöcke, einem Bewegungsschätzer eines Bildblocks, der eine Bewegungsschätzung liefert, einer Schaltung zur diskreten Cosinustransformation (1) des Bildblocks zur Bildung eines laufenden Blocks von Koeffizienten, einer Subtrahierstufe (2) eines vorausgesagten Blocks von dem laufenden Block zur Bildung eines Restblocks, einer Schaltung (3) zur Quantisierung des Restblocks, einer Schaltung (5) zur inversen Quantisierung des Restblocks, einer Addierstufe (6) des dequantisierten Blocks zu dem vorausgesagten Block zur Bildung eines rekonstruierten Blocks, **gekennzeichnet durch** einen Speicher (7) zum Speichern der rekonstruierten Blöcke, einen Bewegungsschätzer (8) für die gespeicherten rekonstruierten Blöcke zur Kompensation dieser Blöcke aus der Bewegungsschätzung, eine Schaltung (8) zur Berechnung der vorausgesagten Koeffizienten **durch** eine lineare Kombination der Koeffizienten der kompensierten, rekonstruierten Blöcke, die den vorausgesagten Block überlappen, **durch** Wichtung der rekonstruierten Koeffizienten in Abhängigkeit von den berechneten, vorausgesagten Koeffizienten.

8. Dekoder für digitale Daten, die gemäß dem Verfahren nach Anspruch 1 kodiert sind, mit einer Schaltung (26) zur inversen Quantisierung, die einen quantisierten Restblock empfängt, einem Summator (27) zum Addieren eines vorausgesagten Blocks zu dem dequantisierten Restblock zur Bildung eines rekonstruierten Blocks, **gekennzeichnet durch** einen Speicher (29) zum Speichern der rekonstruierten Blöcke, einen Bewegungskompensator (30) für die gespeicherten, rekonstruierten Blöcke aus der Bewegungsschätzung, einer Schaltung (30) zur Berechnung der Koeffizienten eines vorausgesagten Blocks **durch** lineare Kombination der Koeffizienten der kompensierten, rekonstruierten Blöcke, die den vorausgesagten Block überlappen, **durch** Wichtung der rekonstruierten Koeffizienten, und eine Schaltung zur inversen, diskreten Cosinustransformation (28) des rekonstruierten Blocks zur Lieferung eines dekodierten Bildes.

9. Dekoder nach Anspruch 8, **dadurch gekennzeichnet, daß** die Wichtung eine Selektion nur der Koeffizienten des Frequenzrangs kleiner als oder gleich demjenigen des berechneten vorausgesagten Koeffizienten ist.

10. Dekoder nach Anspruch 8, **dadurch gekennzeichnet, daß** die Wichtungswerte für die Berechnung der vorausgesagten Koeffizienten digitale Daten sind, die zu dem Strom von durch den Dekoder empfangenen digitalen Daten gehören.

11. Dekoder nach Anspruch 8, **dadurch gekennzeichnet, daß** die Schaltung (28) zur inversen, diskreten Cosinustransformation die Transformation auf Blöcken bewirkt, deren Abmessung auf die Anzahl von Koeffizienten begrenzt ist, die der Auflösung des Dekoders entspricht.

12. Verfahren zur Übertragung von digitalen Daten mit der Übertragung einer Beitragsmatrix mit der Größe eines Blocks von Koeffizienten, wobei jedes Element dieser Matrix die Wichtung des entsprechenden, rekonstruierten Koeffizienten für die Berechnung eines vorausgesagten Koeffizienten und die Übertragung von digitalen Daten darstellt, die in der Lage sind, unter Anwendung der Matrix durch den Dekoder gemäß Anspruch 8 dekodiert zu werden.

FIG.1

# FIG.2

# FIG.3

FIG.4

FIG.5

FIG.6

FIG.7